# EUROPÄISCHE PATENTSCHRIFT

(11) **EP 3 709 786 B1**
(45) Veröffentlichungstag und Bekanntmachung des Hinweises auf die Patenterteilung: **04.09.2024**
(21) Anmeldenummer: 18807211.0
(22) Anmeldetag: 17.10.2018
(51) Int. Cl.: A01B 79/00

(54) **VERFAHREN ZUM BETREIBEN EINES SYSTEMS AUS EINEM LANDWIRTSCHAFTLICHEN ARBEITSFAHRZEUG UND ZUMINDEST EINEM AN DIESEM ANGEORDNETEN ARBEITSGERÄT**
METHOD FOR OPERATING A SYSTEM MADE UP OF AN AGRICULTURAL WORKING VEHICLE AND AT LEAST ONE WORKING TOOL ARRANGED THEREON
PROCÉDÉ PERMETTANT DE FAIRE FONCTIONNER UN SYSTÈME COMPOSÉ D'UN VÉHICULE DE TRAVAIL AGRICOLE ET D'AU MOINS UN ÉQUIPEMENT DE TRAVAIL AGENCÉ AU NIVEAU DUDIT VÉHICULE

(30) Priorität: 17.11.2017 DE 102017220539
(43) Veröffentlichungstag der Anmeldung: 23.09.2020
(73) Patentinhaber: ZF Friedrichshafen AG, 88046 Friedrichshafen (DE)
(72) Erfinder: EBERTSEDER, Thomas, 94060 Pocking (DE)
(74) Vertreter: ZF Friedrichshafen AG
(86) Internationale Anmeldenummer: PCT/EP2018/078349
(87) Internationale Veröffentlichungsnummer: WO 2019/096525

(56) Entgegenhaltungen:
- EP-A1- 2 132 971
- EP-A1- 2 907 385
- WO-A1-01/16661
- DE-A1- 10 335 112
- DE-A1- 102007 034 167
- DE-A1- 102015 225 460
- US-A1- 2009 192 654

## Beschreibung

Die Erfindung betrifft ein Verfahren zum Betreiben eines Systems bestehend aus einem landwirtschaftlichen Arbeitsfahrzeug und zumindest einem an diesem angeordneten Arbeitsgerät sowie ein System aus einem landwirtschaftlichen Arbeitsfahrzeug und zumindest einem an diesem angeordneten Arbeitsgerät.

Des Weiteren betrifft die Erfindung eine Steuerungseinrichtung für ein System aus einem landwirtschaftlichen Arbeitsfahrzeug und zumindest einem an diesem angeordneten Arbeitsgerät sowie ein Computerprogrammprodukt.

Ein System aus einem landwirtschaftlichen Arbeitsfahrzeug, insbesondere einem Traktor, und einem daran angeordneten Arbeitsgerät bildet im Allgemeinen die Grundlage für die Bearbeitung eines landwirtschaftlich genutzten Feldes. Mittels des Arbeitsfahrzeugs wird das Arbeitsgerät über das Feld bewegt und mittels eines Nebenabtriebs angetrieben, um Bearbeitungsschritte wie Bodenbearbeitung, Aussaat, Pflanzen, Ernten, Düngen oder Spritzen durchzuführen. Dabei wird das Arbeitsgerät bei einer Feldfahrt oftmals reihengebunden betrieben, woraus vorgegebene seitliche Abstände der Reihen zueinander resultieren, die einzuhalten sind. Darüber hinaus sind innerhalb einer Reihe zwischen einzelnen Pflanzen des Erntegutes definierte Abstände vorgesehen, welche in Abhängigkeit vom Erntegut bei dessen Aussaat gewählt werden. Die seitlichen Abstände zwischen benachbarten Reihen sowie die Abstände innerhalb einer jeweiligen Reihe, das heißt die Pflanzenabstandszahlen, werden so gewählt, dass für das jeweilige Erntegut ein größtmöglicher Ertrag pro Flächeneinheit gewährleistet ist. So bedarf es bei der Ausführung der verschiedenen Bearbeitungsschritte einer hohen Präzision. Für ein effizientes und sicheres Betreiben des Systems ist es zweckmäßig, die technischen Anforderungen und Gegebenheiten des sie beiliegen Arbeitsgerätes zu berücksichtigen. Aufgrund der Vielzahl von auf dem Markt verfügbaren Arbeitsgeräten stellt es für einen Fahrzeugführer oftmals eine große Herausforderung dar, sich Kenntnis über die jeweils relevanten Informationen zu beschaffen. Die Annahme unrichtiger Informationen oder das gänzliche Fehlen von Informationen können nachteilige Auswirkungen auf die Funktionsweise, die Sicherheit, die Genauigkeit oder die Effizienz des Arbeitsgerätes oder des Systems aus Arbeitsgerät und Fahrzeug haben.

Das Führen des Systems aus Arbeitsfahrzeug und daran angeordnetem Arbeitsgerät erfolgt durch eine Bedienperson, welche die Fahrgeschwindigkeit während der Feldfahrt vorgibt. Dazu ist dem Arbeitsfahrzeug eine Steuerungseinrichtung zugeordnet, welche zur Einstellung und Einhaltung einer konstanten Fahrgeschwindigkeit eingerichtet sein kann. Die Vorgabe der Fahrgeschwindigkeit erfolgt durch die Bedienperson, welche sich an den gewonnenen subjektiven Eindrücken der jeweiligen Bodenbeschaffenheit eines zu bearbeitenden Feldes orientiert. Für den Fall, dass die Steuerungseinrichtung nicht zur Einhaltung einer konstanten Fahrgeschwindigkeit eingerichtet ist, muss die Bedienperson die Fahrgeschwindigkeit aktiv steuern.

Aus dem Stand der Technik sind Systeme bekannt, wonach eine Erkennung eines an das Arbeitsfahrzeug angebauten Arbeitsgerätes mittels eines Bussystems erfolgt, an welches das Arbeitsgerät angeschlossen wird. Hierbei kommt es zu einer direkten, kabelgebundenen Datenübertragung zwischen dem Arbeitsgerät und dem Arbeitsfahrzeug. In diesem Zusammenhang sei beispielsweise auf die DE 198 04 740 A1 verwiesen.

Zwingende Voraussetzung für das Funktionieren der Datenübertragung ist, dass sowohl das Arbeitsfahrzeug als auch das Arbeitsgerät über miteinander kommunizierende Bussysteme verfügen müssen. Dies ist zumindest bei älteren Arbeitsfahrzeugen bzw. Arbeitsgeräten oftmals nicht der Fall und nur mit einem hohen Aufwand nachträglich realisierbar. Zudem treten oftmals Probleme hinsichtlich der Kompatibilität auf, was auf unterschiedliche Ursachen zurückführbar ist. Insbesondere werden von verschiedenen Herstellern der Arbeitsfahrzeuge oder Arbeitsgeräte unterschiedliche Kombinationsstandards verwendet, welche eine Kombination ausschließen oder zumindest fehleranfällig machen. Ein weiterer Schwachpunkt ist die notwendige physische Verbindung von Kommunikationsleitungen zwischen dem Arbeitsfahrzeug und dem Arbeitsgerät, welche nicht nur einen zusätzlichen Aufwand darstellt, sondern auch störungsanfällig sein kann.

Aus der DE 10 2007 034 167 A1 ist es bekannt, ein Arbeitsgerät als Teil eines Systems aus einem landwirtschaftlichen Arbeitsfahrzeug und dem Arbeitsgerät mit einem im Radiofrequenzbereich auslesbaren und beschreibbaren Transponder zu versehen, der Teil eines Radiofrequenzidentifikationssystems ist. Zusätzlich umfasst das Arbeitsgerät einen Jobrechner, welcher ein Schreib-/Lesegerät umfasst, um Daten von dem Transponder zu empfangen und an diesen zu senden. Alternativ kann das Arbeitsfahrzeug ein eigenes im Radiofrequenzbereich arbeitendes Schreib-/Lesegerät aufweisen, um direkt mit dem Transponder an dem Arbeitsgerät kommunizieren zu können. Zur Kommunikation mit dem Transponder ist das Schreib-/Lesegerät des RFID-Systems in ein bestehendes CAN-Netzwerk am Arbeitsfahrzeug oder am Arbeitsgerät eingebunden. Betriebsdaten des Arbeitsgerätes werden von dem Jobrechner oder einer Steuereinrichtung des Arbeitsfahrzeugs erfasst und an den Transponder übertragen.

Aus der EP 2 907 385 A1 ist ein Verfahren zum Betreiben eines Systems aus einem als Schlepper ausgeführtem landwirtschaftlichen Arbeitsfahrzeug und einer an dem Arbeitsfahrzeug angeordneten Feldspritze bekannt. Die Feldspritze weist ein Gestänge auf, welche aufgrund der zunehmend größer werdenden Arbeitsbreiten immer höheren mechanischen Belastungen durch Trägheitskräfte bei Kurvenfahrt ausgesetzt ist. Zur Erfassung der mechanischen Belastungen ist an dem Gestänge ein Beschleunigungssensor angeordnet, welcher beim Auftreten einer mechanischen Belastung auf das Gestänge, welche die Dämpfungseigenschaften von an dem Gestänge angeordneten Dämpfungsmitteln überschreitet, den Wert dieser mechanischen Belastung erfasst. Dieser Wert wird in an eine Ausgabeeinrichtung in der Kabine des Schleppers gesandt, um einer Bedienperson des Schleppers das Auftreten einer hohen mechanischen Belastung an dem Gestänge der Feldspritze zu signalisieren, die zu einer Beschädigung des Gestänges beziehungsweise einem erhöhten Verschleiß der Dämpfungsmittel führt. Durch das Anzeigen der mechanischen Belastungsspitzen mittels der Ausgabeeinrichtung soll die Bedienperson angehalten werden, die Fahrgeschwindigkeit bzw. die Fahrweise anzupassen.

Die DE 103 35 112 A1 offenbart einem Schlepper mit einem Ladewagen zum Aufnehmen und Einfahren von Erntegut. Der Ladewagen ist mittels einer Deichsel an den Schlepper angehängt. Im Bereich der Deichsel ist ein Sensor zum Erfassen der Bodenkontur angeordnet. In Abhängigkeit eines Signals des Sensors wird eine Halmgutaufnahmevorrichtung in ihrer Höhe verfahren. Der Ladewagen weist darüber hinaus einen Kratzbodenantrieb auf, der in Abhängigkeit von Sensorsignalen angesteuert wird, die den Füllzustand eines Stauraums des Ladewagens wiedergeben. Die Sensorsignale werden per Bluetooth auf eine elektronische Steuereinheit übertragen.

Ausgehend von dem vorstehend beschriebenen Stand der Technik ist es nun die Aufgabe der vorliegenden Erfindung, ein Verfahren zum Betreiben eines Systems bestehend aus einem landschaftlichen Arbeitsfahrzeug und zumindest einem an diesem angeordneten Arbeitsgerät sowie ein System aus einem landwirtschaftlichen Arbeitsfahrzeug und zumindest einem an diesem angeordneten Arbeitsgerät bereitzustellen, um das Erfassen und Austauschen von Betriebsdaten zwischen dem Arbeitsgerät und dem Arbeitsfahrzeug zu vereinfachen und kostengünstiger zu gestalten.

Diese Aufgabe wird aus verfahrenstechnischer Sicht durch die Merkmale des Anspruchs 1 gelöst. Aus vorrichtungstechnischer Sicht erfolgt eine Lösung der Aufgabe durch die Merkmale des nebengeordneten Anspruchs 15. Die hierauf jeweils folgenden, abhängigen Ansprüche geben jeweils vorteilhafte Weiterbildungen der Erfindung wieder. Eine Steuerungseinrichtung für ein System aus einem landwirtschaftlichen Arbeitsfahrzeug und zumindest einem an diesem angeordneten Arbeitsgerät, welche zur Ausführung des erfindungsgemäßen Verfahrens eingerichtet ist, ist ferner Gegenstand des nebengeordneten Anspruchs 17.

Gemäß der Erfindung wird ein Verfahren zum Betreiben eines Systems, bestehend aus einem landwirtschaftlichen Arbeitsfahrzeug und zumindest einem an diesem angeordneten Arbeitsgerät, mit einer dem Arbeitsfahrzeug zugeordneten Steuerungseinrichtung sowie wenigstens eine zumindest an dem Arbeitsgerät angeordnete Sensoreinheit, vorgeschlagen. Als landwirtschaftliche Arbeitsfahrzeuge kommen unter anderem Traktoren, Trac-Fahrzeuge, Geräteträger oder selbstfahrende Erntemaschinen in Betracht, an denen zumindest ein Arbeitsgerät angebaut oder gezogen wird, wobei es sich bei einem gezogenen Arbeitsgerät auch um einen Anhänger handeln kann. Eine Steuerungseinrichtung kann an dem Arbeitsfahrzeug lösbar angeordnet und mit diesem beweglich sein oder von dem Fahrzeugführer mitgeführt werden. Im letzteren Fall kann es sich beispielsweise um ein Smartphone oder ein Phablet, einen PDA, einen Tablet-PC oder dergleichen handeln.

Die Sensoreinheit umfasst zumindest zwei Sensoren, mittels deren zwei verschiedene physikalische Größen erfasst werden, eine Speichereinheit, in der das Arbeitsgerät kennzeichnende Informationen hinterlegt sind und erfasste Betriebsdaten zumindest des Anbaugerätes kontinuierlich gespeichert werden, sowie eine Sendeeinheit, durch welche von der zumindest einen Sensoreinheit mit der Steuerungseinrichtung drahtlos mittels Bluetooth-Netzwerk kommuniziert wird. Zu einer Aktivierung der Kommunikation miteinander wird die Steuerungseinrichtung in einen Sendebereich der Sensoreinheit gebracht und die in der Speichereinheit zwischengespeicherten Betriebsdaten werden daraufhin an die Steuerungseinrichtung übertragen. Die drahtlose Kommunikation zwischen der Sensoreinheit und der Steuerungseinrichtung erfolgt dabei mittels Bluetooth durch die in die Sensoreinheit integrierte Sendeeinheit. Dabei ist die Verwendung des Bluetooth Low Energy (BLE) - Funkstandards besonders sinnvoll, da dadurch eine hohe Betriebslaufzeit der zumindest einen Sensoreinheit an dem Arbeitsgerät erreicht wird. Mittels der zumindest zwei Sensoren, die verschiedene physikalische Größen erfassen, lassen sich jeweils arbeitsgerätespezifische Betriebsdaten bestimmen, welche in der Speichereinheit hinterlegt werden. Dabei sind die in der Speichereinheit hinterlegten Betriebsdaten mittels der Steuerungseinrichtung jederzeit abrufbar.

Das erfindungsgemäße Verfahren ermöglicht es auf einfache und kostengünstige Weise Arbeitsgeräte, auch nachträglich, mit einer solchen Sensoreinheit auszustatten, welche weder über ein Bussystem noch eine eigene Messsensorik verfügen, um Betriebsdaten des Arbeitsgeräts zu erfassen und einen Informationsaustausch zwischen dem Arbeitsgerät respektive die Übertragung von Betriebsdaten des Arbeitsgeräts auf die dem Arbeitsfahrzeug zugeordnete Steuerungseinrichtung zu ermöglichen. Der Fahrzeugführer des Arbeitsfahrzeuges kann mittels der Steuerungseinrichtung die gespeicherten Betriebsdaten des Arbeitsgerätes empfangen, auswerten und sich anzeigen lassen. Ebenso sind die von der Steuerungseinrichtung empfangen Betriebsdaten mittels einer Funkverbindung, z.B. UMTS oder W-LAN, an ein übergeordnetes zentrales Planungssystem übertragbar. Die Betriebsdaten werden auch über einen längeren Zeitraum in der Speichereinheit vorgehalten, zumindest jedoch für die Dauer bis zu einem Abruf durch die Steuerungseinrichtung. Die Übertragung der in der Speichereinheit der Sensoreinheit gespeicherten Betriebsdaten wird automatisiert durchgeführt, wenn die Steuerungseinrichtung in die Sendereichweite der Sensoreinheit gebracht wird.

Um eine eindeutige Zuordnung der von der Sensoreinheit empfangenen Betriebsdaten zu gewährleisten, kann die Sensoreinheit eine individuelle Kennung aufweisen, durch welche die Sensoreinheit von der Steuerungseinrichtung identifiziert wird. Dabei kann die Steuerungseinrichtung in der Weise betrieben werden, dass in einem ersten Schritt die individuelle Kennung der Sensoreinheit mittels einer in der Steuerungseinrichtung hinterlegten Datenbank abgeglichen wird. Auf Grundlage des erfolgten Abgleichs kann von der Steuerungseinrichtung entschieden werden, ob die Kommunikation mit der Sensoreinheit fortgeführt wird, um Betriebsdaten des Arbeitsgerätes, an dem die Sensoreinheit angeordnet ist, zu empfangen. Bevorzugt kann der Sendeeinheit der an dem Arbeitsgerät angeordneten Sensoreinheit von der Steuerungseinrichtung eine individuelle Kennung zugewiesen werden, mittels der das Arbeitsgerät von der Steuerungseinrichtung identifiziert wird, wenn diese sich innerhalb der Sendereichweite der Sendeeinheit befindet. Bei der Kennung kann es sich um eine fest zugewiesene, eindeutige Adresse der Sendeeinheit handeln. Anhand der Kennung können in der Steuerungseinrichtung spezifische Daten über das jeweilige Arbeitsgerät abgerufen. Die spezifischen Daten können unter anderem den Typ des Arbeitsgerätes, Bewegungsprofile oder Betriebsdauer sowie für das Betreiben des identifizierten Arbeitsgerätes Vorgaben, wie ein maximales Antriebsmoment, umfassen. So kann von der Steuerungseinrichtung ein Signal an ein Getriebesteuergerät übermittelt werden, welches ein für das Arbeitsgerät zulässiges Drehmoment am Nebenabtrieb des Arbeitsfahrzeuges bereitstellt.

Insbesondere können von der Sensoreinheit als physikalische Größen zumindest Temperatur und Feuchtigkeit bestimmt werden. Entsprechende, in die Sensoreinheit integrierte Temperatur- und Feuchtigkeitssensoren, die bevorzugt als kombinierter Temperatur-und Feuchtigkeitssensor ausgeführt sein können, ermöglichen die Bestimmung von Temperatur und Feuchtigkeit von durch das Arbeitsgerät bearbeitetem, verarbeitetem, transportiertem oder ausgebrachtem Material. Bei dem Material kann es sich beispielsweise um Schüttgut wie Erntegut oder Saatgut oder eine Flüssigkeit wie Gülle, Wasser, Siliermittel oder Pflanzenschutzmittel handeln. So kann beispielsweise der Feuchtigkeitsgehalt von Erntegut bereits auf einem als Transportwagen ausgebildeten Arbeitsgerät bestimmt werden, um anhand der sensorisch bestimmten Feuchtigkeit zu entscheiden, ob das Erntegut zunächst noch einer Trocknung zugeführt werden muss oder direkt eingelagert werden kann.

Gemäß einer bevorzugten Weiterbildung kann die Sensoreinheit eine Positionssignalempfangseinheit umfassen, durch die der jeweilige Aufenthaltsort des Arbeitsgerätes unabhängig von seinem Betriebszustand kontinuierlich erfasst wird. Der jeweilige Aufenthaltsort des Arbeitsgerätes wird unabhängig davon, ob es von dem Arbeitsfahrzeug mitgeführt und/oder betrieben, von einem Transportfahrzeug zwischen verschiedenen Feldern und/oder Betriebsstätten mitgeführt wird oder an einem Ort auf einer Hofstätte oder einem Feld lagert bzw. abgelegt ist, bestimmt und aufgezeichnet. Anhand der sensorisch erfassten und von der Speichereinheit gespeicherten Positionsdaten lassen sich Information ableiten, welche Wegstrecken vor dem Arbeitsgerät zurückgelegt worden sind, unabhängig davon, ob sich währenddessen eine Steuerungseinrichtung in Reichweite der Sendeeinheit des Arbeitsgerätes befunden hat.

Erfindungsgemäß umfasst die Sensoreinheit einen Beschleunigungssensor, mittels dessen ein Betriebszustand des Arbeitsgerätes bestimmt wird. So lassen sich durch eine entsprechende Auswertung der Signale des zumindest einen Beschleunigungssensors die Betriebsstunden des Arbeitsgerätes bestimmen, da die tatsächlichen Betriebsstunden des Arbeitsgerätes oftmals wegen häufiger Wechsel der Arbeitsfahrzeuge nicht mit den Betriebsstundenzähler der Arbeitsfahrzeuge korrespondieren. Hierbei lassen sich unterschiedliche Betriebszustände, wie Lagerung, Transport und Arbeitsbetrieb des Arbeitsgerätes durch den zumindest einen Bewegungssensor erkennen. Aus den in der Speichereinheit abgespeicherten Daten lässt sich durch die Steuerungseinrichtung die jeweilige Dauer der verschiedenen Betriebszustände bestimmen. Auf diese Weise lassen sich Wartungsintervalle des Arbeitsgerätes zuverlässig überwachen. Die unterschiedlichen Betriebszustände wie Lagerung, Transport und tatsächlicher Arbeitseinsatz des Arbeitsgerätes lassen sich anhand der erfassten Beschleunigungssignale nach sprechender Auswertung durch die Steuerungseinrichtung differenzieren.

Erfindungsgemäß werden von dem zumindest einen Beschleunigungssensor kontinuierlich Signale, die eine Vertikalbeschleunigung repräsentieren, an die Steuerungseinrichtung gesendet werden, durch welche die Signale des zumindest einen Beschleunigungssensors zur Bestimmung von Bewegungsamplituden des Arbeitsgerätes ausgewertet werden, wobei in Abhängigkeit von den Bewegungsamplituden eine Höchstfahrgeschwindigkeit bestimmt wird, die während der Feldfahrt eine Einhaltung einer Reihenbindung des zumindest einen Arbeitsgeräts gewährleistet.

Als ein reihengebundenes Arbeitsgerät wird ein Arbeitsgerät angesehen, welches mehrere nebeneinander angeordnete Arbeitseinheiten aufweist, die der Bearbeitung oder Behandlung eines Feldbodens sowie eines darauf befindlichen Erntegutes dienen. Die Abstände der Arbeitseinheiten zueinander definieren einzelne Reihenabstände, innerhalb derer die Bearbeitung des Feldbodens durch das Arbeitsgerät erfolgt. Die Qualität der Bearbeitung eines Feldes bzw. Feldbodens hängt maßgeblich von der Einhaltung der Reihenabstände sowie der Pflanzenabstandszahlen ab. Insbesondere Bewegungen des Arbeitsgerätes in im Wesentlichen vertikaler Richtung aufgrund von Fahrgeschwindigkeit und Bodenbeschaffenheit können zu Abweichungen bei der Einhaltung führen, welche die Qualität der Bearbeitung respektive den Arbeitsertrag beeinflussen können. Um dem entgegenzuwirken, können mittels der von dem zumindest einen Bewegungssensor erfassten Beschleunigungswerte die Bewegungsamplituden des Arbeitsgerätes bestimmt werden.

Darüber hinaus kann auch die Frequenz der Bewegungsamplituden bestimmt werden. Somit lässt sich das Auftreten von Vibrationen an dem Arbeitsgerät erfassen. Überschreiteten die Bewegungsamplituden einen parametrierbaren Schwellwert, wird von der Steuereinrichtung eine Höchstfahrgeschwindigkeit bestimmt. Die von der Steuereinrichtung bestimmte Höchstfahrgeschwindigkeit kann an die Bodenbeschaffenheit und die daraus resultierenden Bewegungen des Arbeitsgerätes angepasst werden, die sich aus den Bewegungsamplituden ableiten lassen. Der parametrierbare Schwellwert gibt vor, innerhalb welcher Größenordnung der Bewegungsamplituden eine präzise Bearbeitung durch das Arbeitsgerät möglich ist. Diese Schwellwerte variieren dabei in Abhängigkeit von der Art und der Betriebsweise des Arbeitsgerätes, welches jeweils zum Einsatz kommt. Somit lässt sich unter Berücksichtigung der Bodenbeschaffenheit und damit der Betriebsbedingungen beim Einsatz des jeweiligen Arbeitsgerätes bei maximaler Effizienz eine größtmöglich Präzision bei der Bearbeitung eines Feldes erreichen.

Dagegen finden bei dem Verfahren gemäß der EP 2 907 385 A1 lediglich die Fahrgeschwindigkeit und die Fahrweise dadurch Berücksichtigung, als dass der Einfluss auf die mechanische Belastung des als Feldspritze ausgebildeten Arbeitsgerätes im Hinblick auf dessen Verschleiß und Lebensdauer überwacht wird, nicht jedoch der Einfluss auf das Ergebnis der Bearbeitung des Feldes bzw. Feldbodens durch das Arbeitsgerät.

Bevorzugt kann die Fahrgeschwindigkeit des Arbeitsfahrzeugs durch die Steuerungseinrichtung automatisch an die bestimmte Höchstfahrgeschwindigkeit angepasst werden. Die automatische Anpassung der jeweiligen Fahrgeschwindigkeit an die Bodenbeschaffenheit wirkt sich annähernd linear auf die Frequenz der Bewegungen und die Bewegungsamplitude des Arbeitsgerätes aus. Die automatische Anpassung ist dann vorteilhaft, wenn die Steuerungseinrichtung selbst oder eine zusätzliche Steuervorrichtung zur Adaption der aktuellen Fahrgeschwindigkeit des Arbeitsfahrzeugs vorgesehen sind.

Des Weiteren kann die durch die Steuerungseinrichtung bestimmte Höchstfahrgeschwindigkeit des Arbeitsfahrzeugs auf einer Ausgabeeinrichtung visualisiert werden. Die Ausgabeeinrichtung kann beispielsweise Teil der Steuerungseinrichtung sein oder eine auf dem Arbeitsfahrzeug angeordnete Anzeige. Die Visualisierung zeigt der Bedienperson zum einen die Auswirkungen der gewählten Fahrgeschwindigkeit auf das Betriebsverhalten des Arbeitsgerätes an. Hierzu können zusätzlich die von der Sensoreinheit empfangenen Werte visualisiert werden. Zum anderen kann die Visualisierung dazu dienen, die Bedienperson dahingehend zu instruieren, die aktuelle Fahrgeschwindigkeit manuell anzupassen, wenn eine entsprechende Steuervorrichtung zur automatischen Geschwindigkeitsregelung des Arbeitsfahrzeugs nicht vorhanden ist.

Gemäß einer bevorzugten Weiterbildung können von einem Positionsortungssystem empfangene Positionssignale an die Steuerungseinrichtung gesandt werden, die von der Steuerungseinrichtung den jeweiligen von dem zumindest einen Beschleunigungssensor erfassten Signale, die Vertikalbeschleunigung repräsentieren, zugeordnet werden. Hierzu kann die Sensoreinheit einen zusätzlichen Sensor aufweisen, der zum Empfang der Positionsortungssignale eingerichtet ist. Die Positionsortungssignale werden, wie auch die Signale des Beschleunigungssensors, zumindest temporär in der Speichereinheit der Sensoreinheit hinterlegt, um diese auch zu einem späteren Zeitpunkt auslesen zu können.

Somit können die erfassten Bewegungsamplituden und deren Frequenz von der Steuerungseinrichtung mittels der erfassten Positionssignale kartiert werden. Mittels der kartierten Daten lässt sich ein individuelles Bewegungsprofil für das System aus Arbeitsfahrzeug und Arbeitsgerät erstellen, das das Feld oder den Schlag bearbeitet hat. Ein solches Bewegungsprofil kann bei einer neuerlichen Bearbeitung desselben Feldes durch das System abgerufen werden, um die Fahrgeschwindigkeit im Vorhinein anzupassen. Dabei kann durch das erneute Erfassen der Vertikalbeschleunigung bei einem weiteren Bearbeiten des Feldes das Bewegungsprofil aktualisiert werden.

Eine bevorzugte Weiterbildung des Verfahrens sieht vor, dass die Signale des zumindest einen Beschleunigungssensors von der Steuerungseinrichtung zur Betriebszustandserkennung ausgewertet werden. So lassen sich durch eine entsprechende Auswertung der Signale des zumindest einen Beschleunigungssensors die Betriebsstunden des Arbeitsgerätes bestimmen, da die tatsächlichen Betriebsstunden des Arbeitsgerätes oftmals wegen häufiger Wechsel der Arbeitsfahrzeuge nicht mit den Betriebsstundenzähler der Arbeitsfahrzeuge korrespondieren. Hierbei lassen sich unterschiedliche Betriebszustände, wie Lagerung, Transport und Arbeitsbetrieb des Arbeitsgerätes durch den zumindest einen Bewegungssensor erkennen. Aus den in der Speichereinheit abgespeicherten Daten lässt sich durch die Steuerungseinrichtung die jeweilige Dauer der verschiedenen Betriebszustände bestimmen.

Eine vorteilhafte Ausgestaltung des Verfahrens sieht vor, dass in der Speichereinheit zumindest ein für das Arbeitsgerät spezifischer Betriebsparameter hinterlegt wird, welcher von einem Steuergerät des Arbeitsfahrzeugs zum Betreiben des Arbeitsgerätes verwendet wird. So kann der zumindest eine Betriebsparameter einen Wert für ein maximal übertragbares Drehmoment und/oder spezielle Hydraulik-/Steuerungsanpassungen umfassen. Weitere Betriebsparameter können die Abmessungen, u.a. Arbeitstiefe, Arbeitsbreite, die Länge, Gewicht oder die Schwerpunktlage des Arbeitsgerätes sein. Weiterhin können bevorzugte hydraulische Kanalbelegung, Ventileinstellungen, Flussraten, Zeitgeberwerte oder Zapfwellengeschwindigkeiten, Zapfwellenmomente oder Anschlussmaße als Betriebsparameter hinterlegt sein. Hierdurch wird der Fahrzeugführer beim Anschließen des Arbeitsgerätes an das Arbeitsfahrzeug und dessen Inbetriebnahme unterstützt und entlastet.

Dabei kann vorgesehen sein, dass der zumindest eine spezifische Betriebsparameter von der Steuerungseinrichtung oder der zumindest einen Sensoreinheit an das Steuergerät des Arbeitsfahrzeugs übermittelt wird. D. h., die Kommunikation zur Übermittlung des zumindest einen für das Arbeitsgerät spezifischen Betriebsparameter kann mittelbar über die Steuerungseinrichtung erfolgen oder unmittelbar durch einen Datenaustausch zwischen der Sensoreinheit und dem Steuergerät des Arbeitsfahrzeugs.

Das Bestimmen der Beschleunigungsamplituden durch die Steuerungseinrichtung kann zur Steuerung des Getriebesteuergeräts verwendet werden. Eine solche Kombination ist vorteilhaft an Arbeitsgeräten verwendbar, welche zur Fluidausbringung eingesetzt werden. Dabei kann es sich beispielsweise um eine Feldspritze oder ein Güllefass mit Exaktverteiler handeln, das an dem Arbeitsfahrzeug angeordnet und von diesem angetrieben wird. Die kontinuierliche Änderung des Füllstandes im Fluidbehälter des fluidausbringenden Arbeitsgerätes während der Feldfahrt führt bei zunehmender Entleerung zu einer Veränderung der Bewegungsamplituden aufgrund der vertikalen Beschleunigung beim Überfahren von Bodenunebenheiten. Daraus lässt sich auf eine Füllstandsänderung in dem Fluidbehälter rückschließen. Da ein Arbeitsfahrzeug, welches ein Arbeitsgerät mit einem volleren Fluidbehälter mit sich führt, andere Getriebeeinstellungen benötigt als bei einem Arbeitsgerät mit einem leeren Fluidbehälter, lässt sich das Getriebesteuergerät entsprechend ansteuern. Zusätzlich kann ein Füllstandsensor vorgesehen sein, der Füllstandsignale an die Steuerungseinrichtung übermittelt, wodurch die Ansteuerung des Getriebesteuergeräts präziser möglich wird.

Bevorzugt können von der Sensoreinheit durch eine Füllstandsensorik bereitgestellte Füllstanddaten eines fluidausbringenden Arbeitsgerätes empfangen und gespeichert werden. Durch die Füllstandsensorik bestimmte Daten hinsichtlich des Beladungszustandes des fluidausbringenden Arbeitsgerätes können auf diese Weise dem Fahrzeugführer zur Kenntnis gebracht werden, wenn sich dieser mit seiner Steuerungseinrichtung innerhalb des Sendebereiches der Sensoreinheit befindet. Insbesondere beim Ausbringen von Flüssigkeiten ist es für den Fahrzeugführer von Bedeutung, den Beladungszustand des Arbeitsgerätes bzw. des als Anhänger ausgeführten Arbeitsgerätes zu kennen, um vorausschauend planen zu können. Ebenfalls von Bedeutung ist die Kenntnis der Füllstanddaten relevant für eine Mengenabrechnung, wenn es sich bei den Arbeitsgeräten um Leih- oder Leasingarbeitsgeräte handelt. Gleiches gilt für die Anzahl von Befüllungen eines Tanks des Arbeitsgerätes.

Gemäß einer vorteilhaften Weiterbildung können von der Sensoreinheit mittels eines Feuchtigkeitssensors Füllstanddaten eines fluidausbringenden Arbeitsgerätes bestimmt und gespeichert werden. Bei dieser Weiterbildung kann die Sensoreinheit als Füllstandsensor fungieren. Im einfachsten Fall ist eine Anordnung einer Sensoreinheit in einem Behältnis für eine Flüssigkeit in einer Position vorgesehen, welche einem Mindestfüllstand in dem Behältnis entspricht, der bei einer Neubefüllung des Behältnisses überschritten werden muss. Selbstverständlich können auch mehrere Sensoreinheiten vorgesehen sein, um verschiedene Füllstände bestimmen zu können.

Weiterhin kann vorgesehen sein, dass von der Steuerungseinrichtung die von der Sensoreinheit empfangenen Füllstanddaten zur Ansteuerung eines Getriebesteuergerätes des Arbeitsfahrzeugs verwendet werden. Durch die Auswertung der von der Sensoreinheit an die Steuerungseinrichtung übertragenen Füllstanddaten kann auf das jeweilige aktuelle Gewicht des Arbeitsfahrzeugs und des daran angeordneten Arbeitsgerätes, wie einem Tankwagen oder Güllefass, geschlossen werden, um in Abhängigkeit von dem bestimmten Gewicht Getriebeeinstellungen des Arbeitsfahrzeuges durch eine Ansteuerung durch das Getriebesteuergerät anzupassen. Dies ist insbesondere dann von Vorteil, wenn das Arbeitsgerät ein gezogenes Güllefass ist, dessen Füllstand sich fortlaufend ändert und daher wiederkehrend eine Anpassung der Getriebeeinstellung erforderlich wird. Diese Anpassung der Getriebeeinstellung kann aufgrund einer kontinuierlich durchgeführten Überwachung des Füllstandes durch die Sensoreinheit auch automatisch angesteuert werden.

Gemäß dem Anspruch 15 wird zur Lösung der Aufgabe ein System aus einem landwirtschaftlichen Arbeitsfahrzeug und zumindest einem an diesem angeordneten Arbeitsgerät vorgeschlagen. Das System umfasst eine dem Arbeitsfahrzeug zugeordnete Steuerungseinrichtung sowie zumindest eine an dem Arbeitsgerät angeordnete Sensoreinheit. Die Sensoreinheit umfasst zumindest zwei Sensoren zur Erfassung zweier physikalischer Größen, eine Speichereinheit, zur kontinuierlichen Speicherung von Betriebsdaten zumindest des Anbaugerätes, sowie eine Sendeeinheit zur drahtlosen Kommunikation mit der Steuerungseinrichtung. Für eine automatische Aktivierung der Kommunikation von Sensoreinheit und Steuerungseinrichtung miteinander muss die Steuerungseinrichtung in einen Sendebereich der Sensoreinheit gebracht werden, um in der Speichereinheit zwischengespeicherte Betriebsdaten automatisiert auf die Steuerungseinrichtung zu übertragen.

Erfindungsgemäß ist das aus einem landwirtschaftlichen Arbeitsfahrzeug und zumindest einem an diesem angeordneten Arbeitsgerät bestehende System bei einer Feldfahrt reihengebunden betreibbar, wobei ein Sensor der Sensoreinheit als ein Beschleunigungssensor ausgebildet ist, der kontinuierlich Signale, die eine Vertikalbeschleunigung repräsentieren, an die Steuerungseinrichtung aussendet, welche zur Auswertung der Signale des zumindest einen Beschleunigungssensors zur Bestimmung von Bewegungsamplituden des Arbeitsgerätes und in Abhängigkeit von den Bewegungsamplituden zur Bestimmung einer Höchstfahrgeschwindigkeit eingerichtet ist, die während der Feldfahrt eine Einhaltung der Reihenbindung des zumindest einen Arbeitsgeräts gewährleistet. Die Anordnung der zumindest einen Sensoreinheit kann bevorzugt an exponierten Stellen des Arbeitsgerätes erfolgen. Denkbar ist auch die Anordnung einer Tastvorrichtung an dem Arbeitsgerät, die durch die Bodenunebenheiten eine Auslenkung erfährt. An der Tastvorrichtung ist wiederum die zumindest eine Sensoreinheit angeordnet. Dabei kann die Tastvorrichtung als ein an einem Rahmengestell angeordnetes Tastrad ausgeführt sein. Mittels des Rahmengestells kann die Tastvorrichtung an dem Arbeitsgerät lösbar angeordnet werden.

Vorteilhaft ist, dass die zumindest eine Sensoreinheit an dem Arbeitsgerät nachrüstbar sein kann. Es wird ein nachträglicher Einsatz der Sensoreinheit ermöglicht, welche mit der Steuerungseinrichtung, die im Fall der Nachrüstung als ein portables Datenempfangsgerät ausgeführt ist, drahtlos, insbesondere via Bluetooth Low Energy - Funkstandard, kommunizieren kann. Da es einer Verkabelung zur Signal- und Energieübertragung an die Sensoreinheit nicht bedarf, ist die Nachrüstung eines Arbeitsgerätes einfach zu realisieren. Es bedarf somit keiner Nachrüstung des Arbeitsfahrzeuges mit einer zusätzlichen Steuerungseinrichtung. Stattdessen kommt das als Smartphone oder Tablet ausgeführte portable Datenempfangsgerät zur Anwendung. Auf dem portablen Datenempfangsgerät sind die sensorisch erfassten Daten wie auch die in Abhängigkeit von den Bewegungsamplituden bestimmte Fahrgeschwindigkeit nahezu in Echtzeit visualisierbar. Somit kann die Bedienperson diese Informationen nutzen, um manuell die jeweilige Fahrgeschwindigkeit objektiv, anhand der Visulisierung der Messwerte, an die Bodenbeschaffenheit/die Bewegungen am Anbaugerät anzupassen. Dafür ist ein entsprechender Programmcode auf dem mobilen Datenempfangsgerät hinterlegt, welcher zur Auswertung der Signale des Beschleunigungssensors und Bestimmung der Höchstfahrgeschwindigkeit ausgeführt ist.

Des Weiteren wird eine Steuerungseinrichtung für ein System aus einem landwirtschaftlichen Arbeitsfahrzeug und zumindest einem an diesem angeordneten Arbeitsgerät vorgeschlagen, wobei die Steuerungseinrichtung zur Durchführung eines Verfahrens nach einem der Ansprüche 1 bis 14 eingerichtet ist.

In vorteilhafter Weiterbildung kann die Steuerungseinrichtung zur Auswertung der von der Sensoreinheit empfangenen Betriebsdaten eingerichtet sein. Hierzu kann auf der Steuerungseinrichtung eine Software hinterlegt sein, um die Betriebsdaten auszuwerten. Dies ermöglicht es, dass die Steuerungseinrichtung Warnhinweise generiert, die der Bedienperson akustisch und/oder optisch zur Kenntnis bringbar sind. Dabei kann es sich beispielsweise um Füllstandmeldungen handeln oder die Fälligkeit einer Wartung des Arbeitsgerätes.

Die mittels Bluetooth-Standard stattfindende Kommunikation sollte dabei nicht ungesichert erfolgen. Hierzu kann in der Speichereinheit der Sensoreinheit ein Schlüssel hinterlegt sein, der bei einem Kommunikationsaufbau durch eine in den Sendebereich gebrachte Steuerungseinrichtung übertragen werden muss.

Insbesondere kann die Steuerungseinrichtung zur Übermittlung zumindest eines Auswahlparameters an ein Getriebesteuergerät des Arbeitsfahrzeugs eingerichtet sein. Hierzu kann die Steuerungseinrichtung nach Herstellung einer Datentransferverbindung von der Sensoreinheit für das jeweilige Arbeitsgerät spezifische Betriebsdaten empfangen, durch welche das Arbeitsgerät oder die Art des Arbeitsgerätes identifizierbar ist. Anhand der Identifizierung des Arbeitsgerätes wird die Bestimmung eines Auswahlparameters zur Ansteuerung des Getriebesteuergerätes des Arbeitsfahrzeugs ermöglicht, um das angeschlossene Arbeitsgeräte mit einer für das jeweilige Arbeitsgerät spezifischen Voreinstellung, die in dem Getriebesteuergerät hinterlegbar ist, zu betreiben. So kann ein für den Antrieb maximal zulässiges Drehmoment für das jeweilige Arbeitsgerät im Getriebesteuergerät abgelegt sein, welches aufgrund der Identifizierung durch die Steuerungseinrichtung auswählbar ist. Somit kann vom Getriebesteuergerät aus einer hinterlegten Druck-Drehmoment-Kennlinie, die einem spezifischen Arbeitsgerät oder Arbeitsgerätetyp zugeordnet ist, der dem maximalen zulässigen Drehmoment zugehörige maximale Druck ausgewählt werden und durch ein Proportionalventil an einer Nebenabtrieb-Kupplung eingestellt werden, wodurch durch die Nebenabtrieb-Kupplung nur das maximal zulässige Drehmoment übertragen werden kann.

Vorteilhafte Ausführungsformen der Erfindung, die nachfolgend erläutert werden, sind in den Zeichnungen dargestellt. Es zeigt:
- Fig. 1: eine schematische Ansicht eines Systems aus einem landwirtschaftlichen Arbeitsfahrzeug und einem Arbeitsgerät;
- Fig. 2: eine schematische Ansicht des Systems aus einem landwirtschaftlichen Arbeitsfahrzeug und einem Arbeitsgerät mit einer daran angeordneten Tastvorrichtung;
- Fig. 3: eine schematische Darstellung des Aufbaus einer Sensoreinheit zur Erfassung und Speicherung von Betriebsdaten eines Arbeitsgerätes; und
- Fig. 4: eine schematische Ansicht eines Systems aus einem landwirtschaftlichen Arbeitsfahrzeug und einem Arbeitsgerät gemäß einer zweiten Ausführungsform.

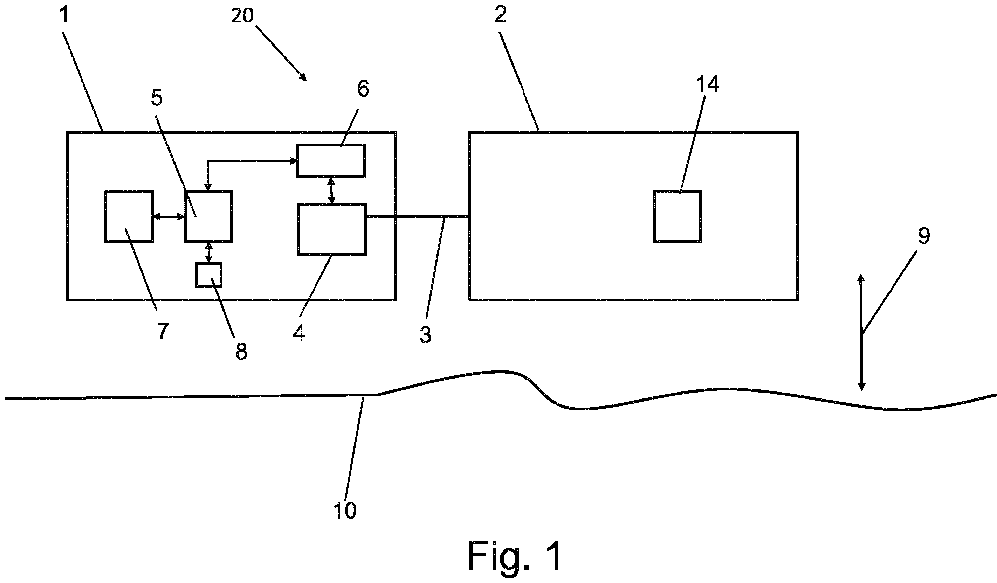

In Fig. 1 ist eine schematische Ansicht eines Systems 20 aus einem landwirtschaftlichen Arbeitsfahrzeug 1 und einem reihengebunden betriebenen Arbeitsgerät 2 dargestellt. Das Arbeitsfahrzeug 1 kann als Traktor, Systemfahrzeug (auch als Trac-Fahrzeug bezeichnet), Geräteträger oder selbstfahrende Erntemaschine ausgeführt sein. Das Arbeitsgerät 2 ist als ein Anbaugerät, das an dem Arbeitsfahrzeug 1 durch entsprechende Aufnahmemittel, wie beispielsweise Front- oder Heckkraftheber am Traktor oder einen Einzugskanal eines selbstfahrenden Mähdreschers, anbringbar ist und von diesem getragen wird, ausgeführt oder von dem Arbeitsgerät 1 gezogen wird, wie beispielsweise ein Güllewagen oder dergleichen. Das Arbeitsgerät 2 arbeitet reihengebunden, das heißt unter Einhaltung von seitlichen Abständen benachbarter zu bearbeitender Reihen sowie von Pflanzenabstandszahlen.

Der Antrieb des Arbeitsgerätes 2 erfolgt durch einen Nebenabtrieb 3 eines Getriebes 4 des Arbeitsfahrzeugs 1. Zur Ansteuerung des Getriebes 4 bzw. des Nebenabtriebs 3 weist das Arbeitsfahrzeug 1 ein Getriebesteuergerät 6 auf. An dem Arbeitsgerät 2 ist zumindest eine Sensoreinheit 14 angeordnet. Mit dem Bezugszeichen 9 ist eine Vertikalbewegung des Arbeitsgerätes 2 bezeichnet, welche dieses beim Überfahren eines zu bearbeitenden Feldbodens 10 ausführt. Die Frequenz und die Bewegungsamplitude der Vertikalbewegungen 9, die auch Vibrationen des Arbeitsgerätes 2 umfassen, sind maßgeblich von der Oberflächenbeschaffenheit des befahrenen Feldbodens 10 sowie der jeweiligen Fahrgeschwindigkeit des Arbeitsfahrzeugs 1, mit welcher das Arbeitsgerät 2 über den Feldboden 10 bewegt wird, abhängig.

Eine dem Arbeitsfahrzeug 1 zugeordnete Steuerungseinrichtung 5 steht signaltechnisch mit einer Ausgabeeinrichtung 7 in Verbindung, welche der Bereitstellung von Betriebsparametern zumindest des Arbeitsfahrzeugs 1 dient. Weiterhin ist die Steuerungseinrichtung 5 signaltechnisch mit dem Getriebesteuergerät 6 des Arbeitsfahrzeugs 1 sowie der zumindest einen Sensoreinheit 14 des Arbeitsgerätes 2 verbunden. Die Kommunikation erfolgt dabei drahtgebunden, beispielsweise via CAN-Bus, oder drahtlos durch Funknetzwerke. Des Weiteren ist eine Positionssignalempfangseinheit 8 vorgesehen, die an dem Arbeitsfahrzeug 1 angeordnet ist. Die Positionssignalempfangseinheit 8 steht signaltechnisch mit der Steuerungseinrichtung 5 in Verbindung. Die Steuerungseinrichtung 5 ist an dem Arbeitsfahrzeug 1 angeordnet. Alternativ kann die Steuerungseinrichtung 5 als ein mobiles Datenempfangsgeräts ausgebildet sein, welches von einer Bedienperson des Arbeitsgerätes 2 mit sich geführt wird. Als mobiles Datenempfangsgerät kommt beispielsweise ein Smartphone oder ein Tablet-PC zum Einsatz. Dafür ist ein entsprechender Programmcode auf dem mobilen Datenempfangsgerät hinterlegt, welcher zur Auswertung der Signale des Beschleunigungssensors 21 und Bestimmung der Höchstfahrgeschwindigkeit ausgeführt ist.

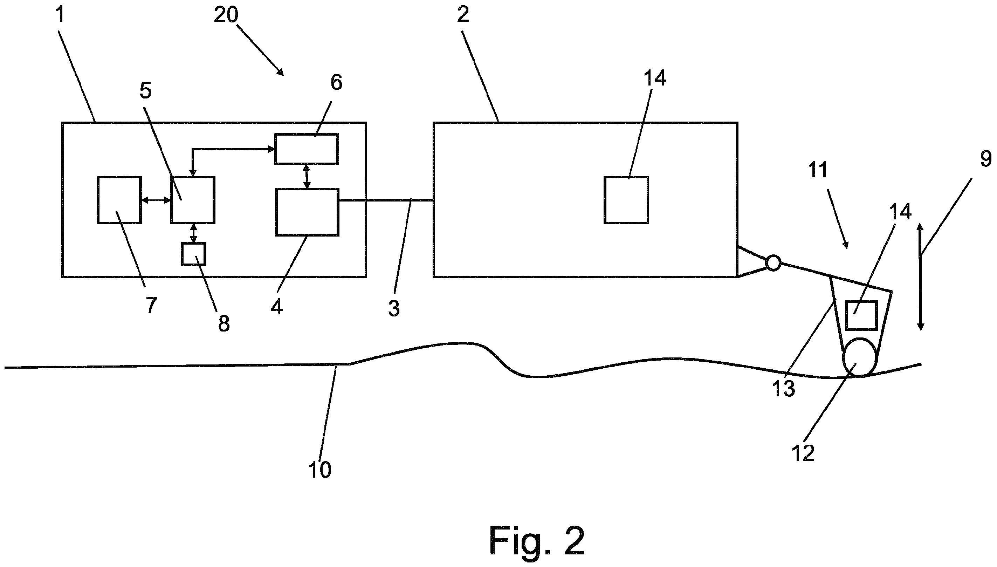

In Fig. 2 ist eine schematische Ansicht des Systems 20 aus einem landwirtschaftlichen Arbeitsfahrzeug 1 und einem reihengebunden betriebenen Arbeitsgerät 2 dargestellt. An dem Arbeitsgerät 2 ist eine Tastvorrichtung 11 angeordnet. Die Tastvorrichtung 11 umfasst ein Tastrad 12, welches mittels eines Rahmens 13 an dem Arbeitsgerät 2 angelenkt ist. Das Tastrad 12 folgt der Bodenkontur des Feldbodens 10, wodurch es eine vertikale Auslenkung erfährt. An dem Rahmen 13 ist eine weitere Sensoreinheit 14 angeordnet.

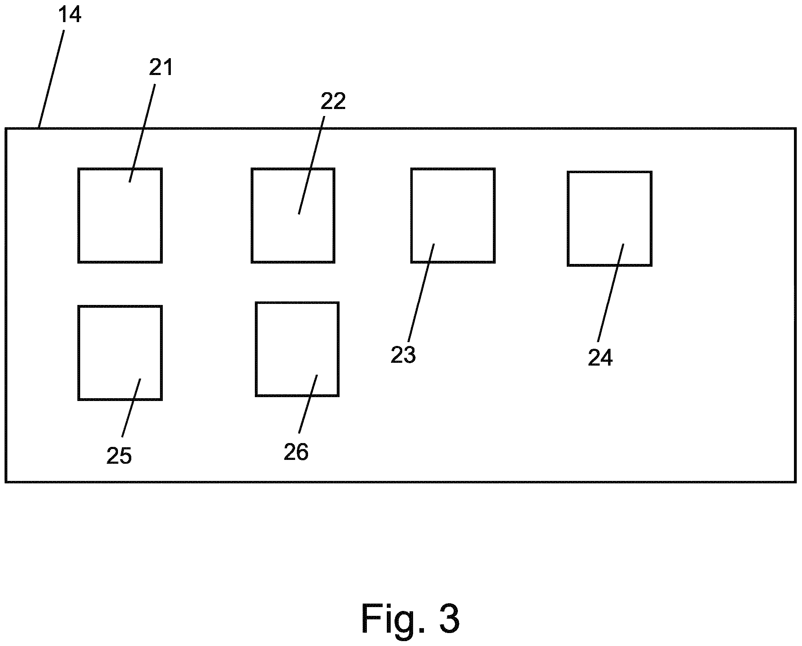

In Fig. 3 ist eine schematische Darstellung des Aufbaus der Sensoreinheit 14 zur Erfassung und Speicherung von Betriebsdaten des Arbeitsgerätes 2 gezeigt. Die Sensoreinheit 14 umfasst zumindest zwei Sensoren zur Erfassung unterschiedlicher physikalischer Größen. Die Sensoreinheit 14 weist einen Beschleunigungssensor 21, wenigstens einen zusätzlichen Sensor 22, eine Speichereinheit 23, eine Sendeeinheit 24 sowie eine Energieversorgungseinheit 25 auf. Weiterhin ist eine Positionssignalempfangseinheit 26 vorgesehen, von der kontinuierlich empfangene Positionssignale an die Speichereinheit 23 übermittelt werden, die diese speichert. Zur signaltechnischen Verbindung der Steuerungseinrichtung 5 mit der Sensoreinheit 14 muss die Steuerungseinrichtung 5 in Sendereichweite der Sendeeinheit 24 gebracht werden.

Von der Speichereinheit 23 werden durch den Beschleunigungssensor 21 erfasste Signale, die eine Vertikalbeschleunigung des Arbeitsgerätes 2 repräsentieren, gespeichert. Mittels des Beschleunigungssensors 21 werden die Vertikalbewegungen 9 des Arbeitsgerätes 2 respektive der Tastvorrichtung 11 erkannt und kontinuierlich als Betriebsdaten erfasst. Die nach dem Funkstandard Bluetooth Low Energy (BLE) arbeitende Sendeeinheit 24 überträgt die von dem Beschleunigungssensor 21 erfassten Signale an die Steuerungseinrichtung 5, wenn sich diese in Reichweite der Sendeeinheit 24 befindet.

Der wenigstens eine zusätzliche Sensor 22 kann als kombinierter Feuchtigkeits- und Temperatursensor ausgeführt sein. Von der Speichereinheit 23 werden von dem kombinierten Temperatur- und Feuchtigkeitssensor 22 erfasste Signale ebenfalls gespeichert. Dabei kann eine Verknüpfung der von der Positionssignalempfangseinheit 26 bereitgestellten Positionsdaten mit den empfangen Signalen der Sensoren 21, 22 beispielsweise durch einen Zeitstempel erfolgen. Die Sensoreinheit 14 ermöglicht somit das automatische Erfassen von Betriebsdaten, die sich aus den erfassten Signalen der verschiedenen Sensoren 21, 22, 26 bestimmen lassen. Die autark arbeitende Sensoreinheit 14 ist an dem Arbeitsgerät 39 nachträglich anbringbar. Die nachträgliche Anbringbarkeit der Sensoreinheit 14 hat den Vorteil, dass diese auch an älteren Arbeitsgeräten zum Einsatz kommen kann, unabhängig vom jeweiligen Hersteller des Arbeitsgerätes. Es bedarf keiner zusätzlichen Verkabelung, da die Sensoreinheit 14 alle für die Kommunikation und Energieversorgung notwendigen Komponenten umfasst.

Zum Betreiben des Systems 20 ist vorgesehen, dass die von dem zumindest einen Beschleunigungssensor 21 kontinuierlich erfassten, eine Vertikalbeschleunigung repräsentierenden Signale an die Steuerungseinrichtung 5 gesandt werden. Von der Steuerungseinrichtung 5 werden die Signale des zumindest einen Beschleunigungssensors 21 zur Bestimmung von Bewegungsamplituden und deren Frequenz des Arbeitsgerätes 2 ausgewertet. Auf Basis dieser Auswertung wird in Abhängigkeit von den Bewegungsamplituden eine Höchstfahrgeschwindigkeit bestimmt, die während der Fahrt über den zu bearbeitenden Feldboden 10 eine Einhaltung der Reihenbindung und/oder des Pflanzreihenabstandes des zumindest einen Arbeitsgeräts 2 gewährleistet. Die Einhaltung dieser Abstände beziehungsweise die Präzision beim Bearbeiten des Feldbodens 10 ist für das Erzielen eines maximalen Ertrags respektive eine bestmögliche Ressourcennutzung wesentlich.

Beispielhaft sei das Verfahren anhand eines als Einzelkornsägerätes ausgeführten Arbeitsgerätes 2 beschrieben. Um eine größtmögliche Effizienz beim Bearbeiten des Feldbodens 10 zu erreichen, wird eine hohe Fahrgeschwindigkeit angestrebt. Hierzu kann mittels der Steuerungseinrichtung 5 eine konstante Fahrgeschwindigkeit eingestellt werden, mit der sich das Arbeitsfahrzeug 1 und das daran angeordnete Arbeitsgerät 2 über den Feldboden 10 bewegen. In Abhängigkeit von der Oberflächenbeschaffenheit des befahrenen Feldbodens 10 treten an dem als Einzelkornsägerät ausgeführten Arbeitsgerät 2 stoßförmige Beschleunigungen, Vertikalbewegungen 9 und/oder Vibrationen unterschiedlicher Amplitude und Frequenz auf. Die hierdurch verursachten Bewegungen der Vorrichtungen zum Ausbringen von Saatgut führen zu einem gravierenden Präzisionsverlust, was sich zu einem späteren Zeitpunkt in einer Ertragsminderung beim Ernten niederschlägt. Da die Bewegungen des Arbeitsgerätes 2 maßgeblich von der Oberflächenbeschaffenheit des befahrenen Feldbodens 10 beziehungsweise von der Fahrgeschwindigkeit des Arbeitsfahrzeugs 1 abhängen, ist die Information über die Bewegungsamplituden des Arbeitsgerätes 2 für die Bedienperson des Arbeitsfahrzeugs 1, vor allem aber für die Ansteuerung des Arbeitsfahrzeugs 1 und des Getriebes 4 von großer Bedeutung. Die von der Steuerungseinrichtung 5 bestimmte Höchstfahrgeschwindigkeit, welche den präzisen Betrieb des Arbeitsgerätes 2 unter Einhaltung der Rahmenbedingungen ermöglicht, wird zur automatischen Anpassung der Fahrgeschwindigkeit des Arbeitsfahrzeugs 1 herangezogen. Dadurch lässt sich eine maximale Effizienz bei Einhaltung der Rahmenbedingungen für die notwendige Präzision beim Betreiben des Arbeitsgerätes 2 erreichen.

Die von der Steuerungseinrichtung 5 bestimmte Höchstfahrgeschwindigkeit des Arbeitsfahrzeugs 1 wird von der Ausgabeeinrichtung 7 visualisiert. So kann die Bedienperson die jeweilige Fahrgeschwindigkeit an die bestimmte Höchstfahrgeschwindigkeit manuell anpassen, wenn eine automatische Anpassung der Fahrgeschwindigkeit des Arbeitsfahrzeugs 1 durch die Steuerungseinrichtung 5 nicht möglich ist.

Darüber hinaus lässt sich die bestimmte Höchstfahrgeschwindigkeit des Arbeitsfahrzeugs 1 auf dem als Steuerungseinrichtung 5 ausgeführten mobilen Datenempfangsgerät der Bedienperson anzeigen. Die Bedienperson kann diese Informationen nutzen, um manuell die Fahrgeschwindigkeit objektiv durch die Visulisierung der Messwerte und der bestimmten Höchstfahrgeschwindigkeit an die Bodenbeschaffenheit respektive an die Bewegungen des Arbeitsgerätes 2 anpassen. Dies kann speziell bei älteren Arbeitsfahrzeugen der Fall sein, da diese im Allgemeinen keine elektronische Geschwindigkeitsregelung aufweisen.

Des Weiteren werden von einem Positionsortungssystem empfangene Positionssignale an die Steuerungseinrichtung 5 gesandt, die von der Steuerungseinrichtung 5 den jeweiligen von dem zumindest einen Beschleunigungssensor 21 erfassten, die Vertikalbeschleunigung repräsentierenden Signalen zugeordnet werden. Die von der Positionssignalempfangseinheit 26 empfangenen Positionssignale wie auch die von dem Beschleunigungssensor 21 erfassten Signale werden in der Speichereinheit 23 der Sensoreinheit 14 hinterlegt. Somit sind diese Betriebsdaten auch zu einem späteren Zeitpunkt abrufbar, wenn zwischenzeitlich keine für den Empfang von Daten der Sensoreinheit 14 eingerichtete Steuerungseinrichtung 5 in Reichweite gewesen ist.

Ein zusätzlicher Anwendungsfall der Sensoreinheit 14 ergibt sich aus der Erkennung von unterschiedlichen Betriebszuständen des Arbeitsgerätes 2. Als Betriebszustände des Arbeitsgerätes 2 sind die Lagerung, der Transport des Arbeitsgerätes 2 zu oder zwischen zu bearbeitenden Feldern sowie der Arbeitseinsatz auf einem zu bearbeitenden Feld zu unterscheiden. Im Fall der Lagerung werden von der Sensoreinheit 14 keine Daten bereitgestellt, die auf eine Bewegung des Arbeitsgerätes 2 zurückschließen lassen. Die Positionssignalempfangseinheit 26 protokolliert entsprechend keine Positionsänderung des Arbeitsgerätes 2. Bei einem Transport des Arbeitsgerätes 2 werden von dem Beschleunigungssensor 21 spezifische Messwerte erfasst, welche für einen Straßentransport charakteristisch sind. Entsprechendes gilt für den tatsächlichen Arbeitseinsatz des Arbeitsgerätes 2, wenn es zur Bearbeitung auf einem Feld zum Einsatz kommt. Die Unterscheidung zwischen den Betriebszuständen anhand der von der Sensoreinheit 14 empfangenen Daten durch die Steuerungseinrichtung 5 ermöglicht es, die tatsächlichen Betriebsstunden zu erfassen.

Eine weitere Anwendungsmöglichkeit ergibt sich bei einem fluidausbringenden Arbeitsgerät 2, wenn dieses über einen zusätzlichen Sensor 22 zur Bestimmung des Füllstandes im Fluidbehälter des Arbeitsgerätes 2 verfügt. Die Bestimmung des aktuellen Füllstandes durch die Steuerungseinrichtung 5 wird verwendet, um das Getriebesteuergerät 6 automatisch anzusteuern. Das Arbeitsfahrzeug 1 wird bei vollem Fluidbehälter mit anderen Getriebeeinstellungen des Getriebes 4 betrieben, als bei einem halbleeren oder entleerten Fluidbehälter. Zudem wirkt sich der abnehmende Füllstand in dem Fluidbehälter des Arbeitsgerätes 2 auf das Beschleunigungsverhalten beim Überfahren von Unebenheit des Feldbodens 10 aus.

Die jeweilige Sendeeinheit 24 wird mit einer fest zugewiesenen, eindeutigen Adresse kodiert, so dass ein jeweils an das Arbeitsfahrzeug 1 angeschlossenes Arbeitsgerät 2 von der Steuerungseinrichtung 5 identifiziert wird, sobald sich die Steuerungseinrichtung 5 in Reichweite der Sensoreinheit 14 befindet. In der Steuerungseinrichtung 5 oder dem Getriebesteuergerät 6 sind für unterschiedliche Arbeitsgeräte 2 spezifische Parameter hinterlegt, welche nach dem Identifizieren des angeschlossenen Arbeitsgeräts 2 abgerufen und vor Inbetriebnahme des Arbeitsgerätes 2 eingestellt werden. So kann beispielsweise dem Arbeitsgerät 2 ein Parameter für ein maximal an dieses übertragbares Drehmoment zugeordnet sein.

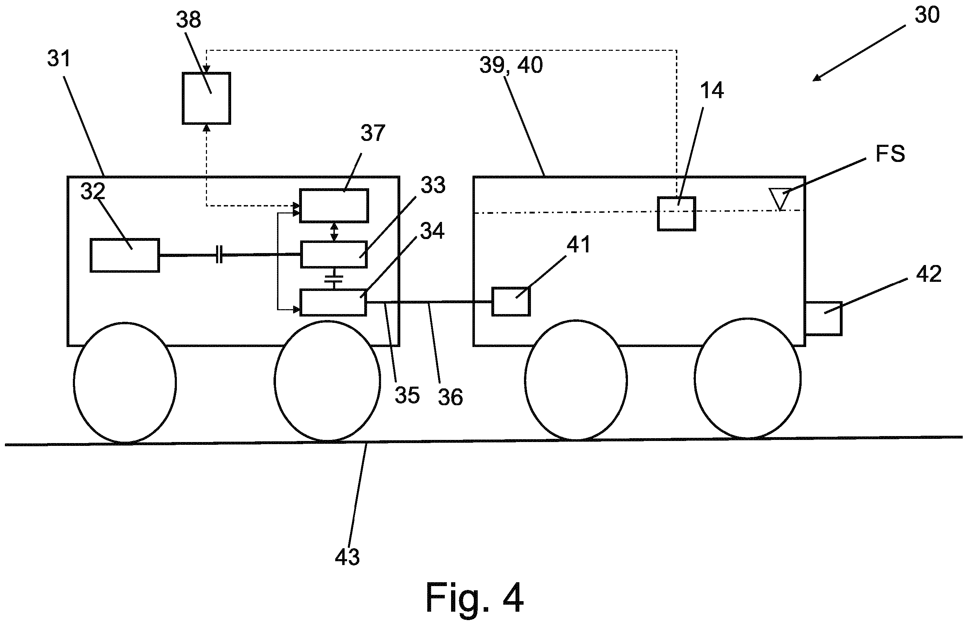

In Fig. 4 ist eine schematische Ansicht eines Systems 30 aus einem als Traktor 31 ausgebildeten landwirtschaftlichen Arbeitsfahrzeug und einem daran angeordneten als Güllewagen 40 ausgebildeten Arbeitsgerät 39 dargestellt, welcher an eine Anhängevorrichtung des Traktors 31 angekoppelt ist. Der Güllewagen 40 wird, wenn dieser als Exaktverteiler ausgeführt ist, reihenabhängig betrieben. Das Ausführungsbeispiel in Fig. 4 zeigt ein weiteres Anwendungsbeispiel für die an einem Arbeitsgerät anbringbare Sensoreinheit 14 zur Betriebsdatenerfassung.

Der Traktor 31 weist eine Antriebsmaschine 32 auf, die als Brennkraftmaschine ausgebildet ist. Die Antriebsmaschine 32 ist durch eine Kupplung mit einem Getriebe 33 verbindbar. Der Antrieb des Arbeitsgerätes 39 erfolgt durch einen Nebenabtrieb 34, welcher mit dem Getriebe 33 des Traktors 31 durch eine Nebenabtrieb-Kupplung trieblich verbindbar ist. Der Nebenabtrieb 34 weist ausgangsseitig eine Zapfwelle 35 auf, an welche eine Gelenkwelle 36 anschließbar ist, um ein Drehmoment auf das Arbeitsgerät 39 zum Antreiben eines Aggregates des Arbeitsgerätes 39 zu übertragen. Im Fall des als Güllewagens 40 ausgeführten Arbeitsgerätes 39 handelt es sich bei dem Aggregat um eine Pumpe 41, welche zum Befüllen und Entleeren des Güllewagens 40 zum Einsatz kommt. Mit Bezugszeichen 42 ist eine an dem Güllewagen 40 angeordnete Ausbringvorrichtung bezeichnet, mit welcher die Gülle auf einem Feld 43 ausgebracht wird. Zur Ansteuerung des Getriebes 33 bzw. des Nebenabtriebs 34 weist das Arbeitsfahrzeug 31 ein Getriebesteuergerät 37 auf. An dem Arbeitsgerät 39 ist die zumindest eine Sensoreinheit 14 angeordnet, welche zur sensorischen Bestimmung und Speicherung von Betriebsdaten des Arbeitsgerätes 39 eingerichtet ist, wie sie in dem System 20 zum Einsatz kommt, welches weiter oben beschrieben wurde.

Eine dem Arbeitsfahrzeug 31 zugeordnete, insbesondere mobile, Steuerungseinrichtung 38 ist signaltechnisch mit der zumindest einen Sensoreinheit 14 des Arbeitsgerätes 39 automatisch verbindbar, wenn die Steuerungseinrichtung 38 in Sendereichweite der Sensoreinheit 14 gebracht wird. Dies kann zum einen dadurch geschehen, dass die Steuerungseinrichtung 38 zusammen mit dem Arbeitsfahrzeug 31 zu dem Arbeitsgerät 39 verbracht wird, oder eine Bedienperson, welche die Steuerungseinrichtung 38 mit sich führt, in Sendereichweite der Sensoreinheit 14 gelangt. Die Kommunikation zwischen der Steuerungseinrichtung 38 und der zumindest einen Sensoreinheit 14 erfolgt dabei drahtlos durch eine Funkverbindung gemäß dem Bluetooth-Funkstandard.

Die nach dem Funkstandard Bluetooth Low Energy (BLE) arbeitende Sendeeinheit 24 überträgt die von den Sensoren 21, 22, 26 erfassten und in der Speichereinheit 23 abgespeicherten Signale automatisch an die Steuerungseinrichtung 38, wenn sich diese in Reichweite der Sendeeinheit 24 befindet. Befindet sich keine Steuerungseinrichtung 38 in Sendereichweite der Sendeeinheit 24, so werden die Daten zumindest für die Dauer bis zu einem späteren Abrufen durch die Steuerungseinrichtung 38 gespeichert. Die autark arbeitende Sensoreinheit 14 ist an dem Arbeitsgerät 39 nachträglich anbringbar.

Der Sensoreinheit 14 kommt neben der Erfassung und Speicherung von Betriebsdaten des Arbeitsgerätes 39 auch die Funktion zu, das Arbeitsgerät 39 eindeutig identifizieren zu können. Hierzu ist in der Speichereinheit 23 eine individuelle Kennung für das Arbeitsgerät 39 hinterlegbar, an dem die Sensoreinheit 14 angeordnet ist. Die individuelle Kennung ist programmierbar, insbesondere mittels der Steuerungseinrichtung 38.

Durch die Positionssignalempfangseinheit 26 kann der jeweilige Aufenthaltsort des Arbeitsgerätes 39 unabhängig von dessen Betriebszustand und dem Bestehen einer datentechnischen Verbindung mit dem Steuerungseinrichtung 38 kontinuierlich erfasst werden. Das heißt, ob das Arbeitsgerät 39 gerade im auf einem Feld im Einsatz ist, sich an einem Arbeitsfahrzeug 31 oder auf einem Transportfahrzeug befindet, um das Arbeitsgerät 39 zwischen verschiedenen zu bearbeitenden Schlägen zu bewegen, oder beispielsweise zu Wartungs- oder Reparaturzwecken auf einer Hofstätte befindet, lässt sich anhand eines aus den kontinuierlich erfassten und gespeicherten Positionsdaten generierbaren Bewegungsprofils bestimmen.

Die durch die Positionssignalempfangseinheit 26 erfassten Positionsdaten lassen sich durch die mit dem Beschleunigungssensor 21 erfassten Daten verknüpfen, um eine unabhängige Betriebsstundenerfassung des Arbeitsgerätes 39 zu ermöglichen.

Der Einsatz des Arbeitsgerätes 39 in Verbindung mit wechselnden Arbeitsfahrzeugen 31 oder der Einsatz von verschiedenen Arbeitsgeräten 39 an einem einzelnen Arbeitsfahrzeug 31, führt dazu dass die vom Betriebsstundezähler des Arbeitsfahrzeugs 31 erfassten Betriebsstunden nicht mit den tatsächlich geleisteten Betriebsstunden des Arbeitsgerätes 39 korrespondieren. Die von dem Arbeitsfahrzeug 31 unabhängige sensorische Bestimmung von Betriebsstunden des Arbeitsgerätes 39 ermöglicht es, bei Leih- oder Leasingarbeitsgeräten deren jeweilige tatsächliche Betriebsdauer genauer zu bestimmen. Zudem können auf diese Weise Wartungsintervalle des Arbeitsgerätes 39 genauer eingehalten werden.

Von der Sensoreinheit 14 wird mittels des Feuchtigkeitssensors 22 das Über- bzw. Unterschreiten eines Füllstands FS des fluidausbringenden Arbeitsgerätes 39, d.h. des Güllewagens 40, überwacht und gespeichert. Die Positionierung der Sensoreinheit 14 kann dabei beispielsweise einem Befüllstand von 85% entsprechen. Wird der Güllewagen 40 nach detektiertem Unterschreiten dieses Befüllstandes erneut befüllt und überschreitet die Füllmenge den Füllstand FS, so wird dies als eine neuerliche Füllung bewertet und entsprechend in der Speichereinheit 23 mit einem Zeitstempel versehen abgespeichert. Eine Anordnung von zumindest einer weiteren Sensoreinheit 14 im Inneren des Güllewagens 40 ermöglicht eine differenziertere Bestimmung verschiedener Füllstände FS.

Die Sensoreinheit 14 kann auch in einem Ladewagen zur Anwendung kommen, auf welchen abgeerntetes Erntegut von einer selbstfahren Erntemaschine wie einem Mähdrescher oder einem Feldhäcksler überladen wird. Zum einen lässt sich das Passieren einer durch die Position der Sensoreinheit vorgebbaren Füllstandhöhe detektieren und auf die Steuerungseinrichtung 38 übertragen, um einen Warnhinweis auszugeben, dass die maximale Füllhöhe bald erreicht wird. Zum anderen ermöglicht der Feuchtigkeitssensor 22 eine Bestimmung des Feuchtegehalts des überladenen Erntegutes, um darüber entscheiden zu können, ob das Erntegut aufgrund des Feuchtigkeitsgehaltes vor einer Einlagerung einer Trocknung unterzogen werden muss.

Eine weitere Anwendungsmöglichkeit ergibt sich bei dem als fluidausbringenden Arbeitsgerät 39 ausgebildeten Güllewagen 40, wenn der durch die zumindest eine Sensoreinheit 14 bestimmte Füllstand im Güllewagen 40 herangezogen wird, um das Getriebesteuergerät 37 automatisch anzusteuern. In Abhängigkeit vom Füllstand im Güllewagen 40 sind unterschiedliche Getriebeeinstellungen notwendig, da ein Arbeitsfahrzeug 31 mit gezogenem vollem Güllewagen 40 andere Getriebeeinstellungen benötigt, als Gespann. Auf diese Weise kann der Fahrzeugführer von einer wiederkehrend durchzuführenden manuellen Anpassung der Getriebeeinstellungen in Abhängigkeit vom Gesamtgewicht des Systems 30 entlastet werden.

Des Weiteren wird in der Speichereinheit 23 zumindest ein für das Arbeitsgerät 39 spezifischer Betriebsparameter hinterlegt, welcher von dem Getriebesteuergerät 37 des Arbeitsfahrzeugs 31 zum Betreiben des Arbeitsgerätes 39 verwendet werden kann. Die Steuerungseinrichtung 38 tritt mit dem Getriebesteuergerät 37 datentechnisch in Verbindung, vorzugsweise drahtlos, und übermittelt an das Getriebesteuergerät 37 als Betriebsparameter die individuelle Kennung des Arbeitsgerätes 39 oder einen Information über die Art und den Typ des Arbeitsgerätes 39. In dem Getriebesteuergerät 37 ist eine mit dem übermittelten Betriebsparameter korrespondierende Konfiguration für das Arbeitsgerät 39 hinterlegbar, welche zur Ansteuerung des Nebenabtriebs 34 verwendet wird. So lässt sich ein von der hydraulisch betätigbaren Nebenabtrieb-Kupplung übertragbares Drehmoment vorgeben, welches für einen ordnungsgemäßen, im Dauerbetrieb beschädigungsfreien, Antrieb des spezifischen Arbeitsgerätes 39 maximal vorgesehen ist.

Den vorstehend beschriebenen Ausführungsbeispielen liegt die gemeinsame Idee zugrunde, ein Verfahren zum Betreiben der Systeme 20, 30 bereitzustellen, welches die Erfassung von Betriebsdaten eines Arbeitsgerätes 2, 39 ermöglicht, unabhängig davon, ob eine zum Empfang und zur Auswertung eingerichtete Steuerungseinrichtung 5, 28 signaltechnisch mit der zumindest einen Sensoreinheit 14 verbunden ist. Die Sensoreinheit 14 erfasst mit ihren zumindest zwei Sensoren 21, 22, 26 die Betriebsdaten des Arbeitsgerätes 2, 39 und speichert diese in ihrer Speichereinheit 23 ab. Somit stehen die Betriebsdaten auch zu einem späteren Zeitpunkt für eine Auswertung zur Verfügung.

Die von der Steuerungseinrichtung 5 bzw. 38 erfassten Betriebsdaten lassen sich auf ein zentrales Planungs- und Verwaltungssystem übertragen, welches auf einem zentralen Rechner einer Hofstätte betreiben wird.

### Bezugszeichen

- 1: Arbeitsfahrzeug
- 2: Arbeitsgerät
- 3: Nebenabtrieb
- 4: Getriebe
- 5: Steuerungseinrichtung
- 6: Getriebesteuergerät
- 7: Ausgabeeinrichtung
- 8: Positionssignalempfangseinheit
- 9: Vertikalbewegung
- 10: Feldboden
- 11: Tastvorrichtung
- 12: Tastrad
- 13: Rahmen
- 14: Sensoreinheit
- 20: System
- 21: Beschleunigungssensor
- 22: Feuchtigkeits- und Temperatursensor
- 23: Speichereinheit
- 24: Sendeeinheit
- 25: Energieversorgungseinheit
- 26: Positionssignalempfangseinheit
- 30: System
- 31: Arbeitsfahrzeug
- 32: Antriebsmaschine
- 33: Getriebe
- 34: Nebenabtrieb
- 35: Zapfwelle
- 36: Gelenkwelle
- 37: Getriebesteuergerät
- 38: Steuerungseinrichtung
- 39: Arbeitsgerät
- 40: Güllewagen
- 41: Pumpe
- 42: Ausbringvorrichtung
- 43: Feldboden
- 20: System

- FS: Füllstand

## Patentansprüche

1. Verfahren zum Betreiben eines Systems (20), bestehend aus einem landwirtschaftlichen Arbeitsfahrzeug (1, 31) und zumindest einem an diesem angeordneten Arbeitsgerät (2, 39), mit einer dem Arbeitsfahrzeug (1, 31) zugeordneten Steuerungseinrichtung (8, 38) sowie wenigstens einer zumindest an dem Arbeitsgerät (2, 39) angeordneten Sensoreinheit (14), die zumindest zwei Sensoren (21, 22, 26), mittels deren zwei unterschiedliche physikalische Größen erfasst werden, eine Speichereinheit (23), in welcher das Arbeitsgerät (2, 39) kennzeichnende Informationen hinterlegt sind und Betriebsdaten zumindest des Arbeitsgerätes (2, 39) kontinuierlich gespeichert werden, sowie eine Sendeeinheit (24), durch welche von der zumindest einen Sensoreinheit (14) mit der Steuerungseinrichtung (5, 38) drahtlos mittels Bluetooth-Netzwerk kommuniziert wird, umfasst, **dadurch gekennzeichnet, dass** zu einer Aktivierung der Kommunikation miteinander die Steuerungseinrichtung (5, 38) in einen Sendebereich der Sensoreinheit (14) gebracht wird und die in der Speichereinheit (23) zwischengespeicherten Betriebsdaten an die Steuerungseinrichtung (5, 38) übertragen werden, die Sensoreinheit (14) einen Beschleunigungssensor (22) umfasst, mittels dessen ein Betriebszustand des Arbeitsgerätes (9) bestimmt wird wobei von dem zumindest einen Beschleunigungssensor (21) kontinuierlich Signale, die eine Vertikalbeschleunigung repräsentieren, an die Steuerungseinrichtung (5, 38) gesendet werden, durch welche die Signale des zumindest einen Beschleunigungssensors (21) zur Bestimmung von Bewegungsamplituden des Arbeitsgerätes (2, 39) ausgewertet werden, und wobei in Abhängigkeit von den Bewegungsamplituden eine Höchstfahrgeschwindigkeit bestimmt wird, die während der Feldfahrt eine Einhaltung einer Reihenbindung des zumindest einen Arbeitsgeräts (2, 39) gewährleistet.

2. Verfahren nach Anspruch 1, **dadurch gekennzeichnet, dass** die Sensoreinheit (14) eine individuelle Kennung aufweist, durch welche die Sensoreinheit (14) von der Steuerungseinrichtung (5, 38) identifiziert wird.

3. Verfahren nach Anspruch 1 oder 2, **dadurch gekennzeichnet, dass** von der Sensoreinheit (14) als physikalische Größen zumindest Temperatur und Feuchtigkeit bestimmt werden.

4. Verfahren nach einem der Ansprüche 1 bis 3, **dadurch gekennzeichnet, dass** die Sensoreinheit (14) eine Positionssignalempfangseinheit (26) umfasst, durch die der jeweilige Aufenthaltsort des Arbeitsgerätes (9) unabhängig von seinem Betriebszustand kontinuierlich erfasst wird.

5. Verfahren nach einem der vorhergehenden Ansprüche, **dadurch gekennzeichnet, dass** die Fahrgeschwindigkeit des Arbeitsfahrzeugs (1, 31) durch die Steuerungseinrichtung (5, 38) automatisch an die bestimmte Höchstfahrgeschwindigkeit angepasst wird.

6. Verfahren nach einem der vorhergehenden Ansprüche, **dadurch gekennzeichnet, dass** die bestimmte Höchstfahrgeschwindigkeit des Arbeitsfahrzeugs (1, 31) durch die Steuerungseinrichtung (5, 38) auf einer Ausgabeeinrichtung (7) visualisiert wird.

7. Verfahren nach einem der vorangehenden Ansprüche, **dadurch gekennzeichnet, dass** von einem Positionsortungssystem empfangenen Positionssignale an die Steuerungseinrichtung (5, 38) gesandt werden, die von der Steuerungseinrichtung (5, 38) den jeweiligen von dem zumindest einen Beschleunigungssensor (21) erfassten, die Vertikalbeschleunigung repräsentierenden Signalen zugeordnet werden.

8. Verfahren nach Anspruch 7, **dadurch gekennzeichnet, dass** die Bewegungsamplituden und deren Frequenz von der Steuerungseinrichtung (5, 38) mittels der erfassten Positionssignale kartiert werden.

9. Verfahren nach einem der vorangehenden Ansprüche, **dadurch gekennzeichnet, dass** die Signale des zumindest einen Beschleunigungssensors (21) von der Steuerungseinrichtung (5, 38) zur Betriebszustandserkennung ausgewertet werden.

10. Verfahren nach einem der vorangehenden Ansprüche, **dadurch gekennzeichnet, dass** in der Speichereinheit (23) zumindest ein für das Arbeitsgerät (2, 39) spezifischer Betriebsparameter hinterlegt wird, welcher von einem Steuergerät (6, 37) des Arbeitsfahrzeugs (1, 31) zum Betreiben des Arbeitsgerätes (2, 39) verwendet wird.

11. Verfahren nach Anspruch 10, **dadurch gekennzeichnet, dass** der zumindest eine spezifische Betriebsparameter von der Steuerungseinrichtung (5, 38) oder der zumindest einen Sensoreinheit (14) an das Steuergerät (6, 37) des Arbeitsfahrzeugs (1, 31) übermittelt wird.

12. Verfahren nach einem der vorangehenden Ansprüche, **dadurch gekennzeichnet, dass** von der Sensoreinheit (14) durch eine Füllstandsensorik bereitgestellte Füllstanddaten eines fluidausbringenden Arbeitsgerätes (40) empfangen und gespeichert werden.

13. Verfahren nach einem der vorangehenden Ansprüche, **dadurch gekennzeichnet, dass** von der Sensoreinheit (14) mittels eines Feuchtigkeitssensors (22) Füllstanddaten eines fluidausbringenden Arbeitsgerätes (40) bestimmt und gespeichert werden.

14. Verfahren nach einem der Ansprüche 12 oder 13, **dadurch gekennzeichnet, dass** von der Steuerungseinrichtung (5, 38) die von der Sensoreinheit (14) empfangenen Füllstanddaten zur Ansteuerung eines Getriebesteuergerätes (6, 37) des Arbeitsfahrzeugs (1, 31) verwendet werden.

15. System (20, 30) aus einem landwirtschaftlichen Arbeitsfahrzeug (1, 31) und zumindest einem an diesem angeordneten Arbeitsgerät (2, 39), mit einer dem Arbeitsfahrzeug (1, 31) zugeordneten Steuerungseinrichtung (5, 38) sowie zumindest einer an dem Arbeitsgerät (2, 39) angeordneten Sensoreinheit (14), die zumindest zwei Sensoren (21, 22, 26) zur Erfassung zweier physikalischer Größen, sowie eine Speichereinheit (23), zur Speicherung von Betriebsdaten des Arbeitsgerätes (2, 39), und eine Sendeeinheit (24) zur drahtlosen Kommunikation mit der Steuerungseinrichtung (5, 38) umfasst, wobei zu einer Aktivierung der Kommunikation miteinander die Steuerungseinrichtung (5, 38) in einen Sendebereich der Sensoreinheit (14) gebracht werden muss, um in der Speichereinheit (23) zwischengespeicherte Betriebsdaten auf die Steuerungseinrichtung (5, 38) zu übertragen, **dadurch gekennzeichnet, dass** das Arbeitsgerät (2, 39) bei einer Feldfahrt reihengebunden betreibbar ist, wobei ein Sensor als ein Beschleunigungssensor (21) ausgebildet ist, der kontinuierlich Signale, die eine Vertikalbeschleunigung repräsentieren, an die Steuerungseinrichtung (5, 38) aussendet, welche zur Auswertung der Signale des zumindest einen Beschleunigungssensors (21) zur Bestimmung von Bewegungsamplituden des Arbeitsgerätes (2, 39) eingerichtet ist und in Abhängigkeit von den Bewegungsamplituden zur Bestimmung einer Höchstfahrgeschwindigkeit eingerichtet ist, die während der Feldfahrt eine Einhaltung der Reihenbindung des zumindest einen Arbeitsgeräts (2, 39) gewährleistet.

16. System (20, 30) nach Anspruch 15, **dadurch gekennzeichnet, dass** die Sensoreinheit (14) an dem Arbeitsgerät (2, 39) nachrüstbar ist.

17. Steuerungseinrichtung (5, 38) eines Systems (20, 30) nach Anspruch 15 oder 16, **dadurch gekennzeichnet, dass** die Steuerungseinrichtung (5, 38) eingerichtet ist, das System nach den Ansprüchen 15 oder 16 zur Durchführung des Verfahrens nach einem der Ansprüche 1 bis 14 zu steuern.

18. Steuerungseinrichtung (5, 38) nach Anspruch 17, **dadurch gekennzeichnet, dass** die Steuerungseinrichtung (5, 38) zur Auswertung der von der Sensoreinheit (14) empfangenen Betriebsdaten eingerichtet ist.

19. Steuerungseinrichtung (5, 38) nach Anspruch 17 oder 18, **dadurch gekennzeichnet, dass** die Steuerungseinrichtung (5, 38) zur Übermittlung zumindest eines Auswahlparameters an ein Getriebesteuergerät (6, 37) des Arbeitsfahrzeugs (1, 31) eingerichtet ist.

## Claims

1. Method for operating a system (20) consisting of an agricultural working vehicle (1, 31) and at least one working device (2, 39) arranged on the latter, having a control device (8, 38) assigned to the working vehicle (1, 31) and at least one sensor unit (14) which is arranged at least on the working device (2, 39) and comprises at least two sensors (21, 22, 26) which are used to capture two different physical variables, a storage unit (23), in which information characterizing the working device (2, 39) is stored and in which operating data relating at least to the working device (2, 39) are continuously stored, and a transmitting unit (24) which is used by the at least one sensor unit (14) to wirelessly communicate with the control device (5, 38) by means of a Bluetooth network, **characterized in that**, in order to activate communication with one another, the control device (5, 38) is moved into a transmission range of the sensor unit (14) and the operating data buffered in the storage unit (23) are transmitted to the control device (5, 38), the sensor unit (14) comprises an acceleration sensor (22) which is used to determine an operating state of the working device (9), wherein signals representing a vertical acceleration are continuously transmitted from the at least one acceleration sensor (21) to the control device (5, 38) which evaluates the signals from the at least one acceleration sensor (21) in order to determine movement amplitudes of the working device (2, 39), and wherein a maximum driving speed, which ensures that the at least one working device (2, 39) follows rows during the field run, is determined on the basis of the movement amplitudes.

2. Method according to Claim 1, **characterized in that** the sensor unit (14) has an individual identifier, by means of which the sensor unit (14) is identified by the control device (5, 38).

3. Method according to Claim 1 or 2, **characterized in that** at least temperature and humidity are determined by the sensor unit (14) as physical variables.

4. Method according to one of Claims 1 to 3, **characterized in that** the sensor unit (14) comprises a position signal receiving unit (26) which is used to continuously capture the respective location of the working device (9) irrespective of its operating state.

5. Method according to one of the preceding claims, **characterized in that** the driving speed of the working vehicle (1, 31) is automatically adapted to the determined maximum driving speed by the control device (5, 38).

6. Method according to one of the preceding claims, **characterized in that** the determined maximum driving speed of the working vehicle (1, 31) is visualized by the control device (5, 38) on an output device (7).

7. Method according to one of the preceding claims, **characterized in that** position signals received from a positioning system are transmitted to the control device (5, 38) and are assigned by the control device (5, 38) to the respective signals which are captured by the at least one acceleration sensor (21) and represent the vertical acceleration.

8. Method according to Claim 7, **characterized in that** the movement amplitudes and their frequency are mapped by the control device (5, 38) by means of the captured position signals.

9. Method according to one of the preceding claims, **characterized in that** the signals from the at least one acceleration sensor (21) are evaluated by the control device (5, 38) in order to identify the operating state.

10. Method according to one of the preceding claims, **characterized in that** at least one operating parameter which is specific to the working device (2, 39) and is used by a control unit (6, 37) of the working vehicle (1, 31) to operate the working device (2, 39) is stored in the storage unit (23) .

11. Method according to Claim 10, **characterized in that** the at least one specific operating parameter is transmitted from the control device (5, 38) or the at least one sensor unit (14) to the control unit (6, 37) of the working vehicle (1, 31).

12. Method according to one of the preceding claims, **characterized in that** filling level data relating to a fluid-spreading working device (40) which are provided by a filling level sensor system are received and stored by the sensor unit (14).

13. Method according to one of the preceding claims, **characterized in that** filling level data relating to a fluid-spreading working device (40) are determined and stored by the sensor unit (14) by means of a humidity sensor (22).

14. Method according to either of Claims 12 and 13, **characterized in that** the filling level data received from the sensor unit (14) are used by the control device (5, 38) to control a transmission control unit (6, 37) of the working vehicle (1, 31).

15. System (20, 30) comprising an agricultural working vehicle (1, 31) and at least one working device (2, 39) arranged on the latter, having a control device (5, 38) assigned to the working vehicle (1, 31) and at least one sensor unit (14) which is arranged on the working device (2, 39) and comprises at least two sensors (21, 22, 26) for capturing two physical variables and a storage unit (23) for storing operating data relating to the working device (2, 39), and a transmitting unit (24) for wirelessly communicating with the control device (5, 38), wherein, in order to activate communication with one another, the control device (5, 38) must be moved into a transmission range of the sensor unit (14) in order to transmit operating data buffered in the storage unit (23) to the control device (5, 38), **characterized in that** the working device (2, 39) can be operated to follow rows during a field run, wherein one sensor is in the form of an acceleration sensor (21) which continuously transmits signals representing a vertical acceleration to the control device (5, 38) which is configured to evaluate the signals from the at least one acceleration sensor (21) in order to determine movement amplitudes of the working device (2, 39) and is configured to determine a maximum driving speed, which ensures that the at least one working device (2, 39) follows rows during the field run, on the basis of the movement amplitudes.

16. System (20, 30) according to Claim 15, **characterized in that** the sensor unit (14) can be retrofitted to the working device (2, 39).

17. Control device (5, 38) of a system (20, 30) according to Claim 15 or 16, **characterized in that** the control device (5, 38) is configured to control the system according to Claims 15 or 16 for carrying out the method according to one of Claims 1 to 14.

18. Control device (5, 38) according to Claim 17, **characterized in that** the control device (5, 38) is configured to evaluate the operating data received from the sensor unit (14).

19. Control device (5, 38) according to Claim 17 or 18, **characterized in that** the control device (5, 38) is configured to transmit at least one selection parameter to a transmission control unit (6, 37) of the working vehicle (1, 31).

## Revendications

1. Procédé permettant de faire fonctionner un système (20) composé d'un véhicule de travail agricole (1, 31) et d'au moins un équipement de travail (2, 39) disposé sur celui-ci, comprenant un dispositif de commande (8, 38) associé au véhicule de travail (1, 31) ainsi qu'au moins une unité de détection (14) disposée sur l'équipement de travail (2, 39) et qui comprend au moins deux capteurs (21, 22, 26) au moyen desquels deux grandeurs physiques différentes sont détectées, une unité de mémoire (23) dans laquelle des informations caractérisant l'équipement de travail (2, 39) et des données de fonctionnement au moins de l'équipement de travail (2, 39) sont enregistrées en continu, ainsi qu'une unité d'émission (24) par laquelle ladite au moins une unité de détection (14) communique sans fil avec le dispositif de commande (5, 38) au moyen d'un réseau Bluetooth,
**caractérisé en ce que** pour une activation de la communication mutuelle, le dispositif de commande (5, 38) est amené dans une zone d'émission de l'unité de détection (14), et les données de fonctionnement mises en mémoire tampon dans l'unité de mémoire (23) sont transmises au dispositif de commande (5, 38), l'unité de détection (14) comprend un capteur d'accélération (22) au moyen duquel un état de fonctionnement de l'équipement de travail (9) est déterminé, ledit au moins un capteur d'accélération (21) envoyant en continu des signaux qui représentent une accélération verticale au dispositif de commande (5, 38) qui analyse les signaux de l'au moins un capteur d'accélération (21) afin de déterminer des amplitudes de mouvement de l'équipement de travail (2, 39), et dans lequel, en fonction des amplitudes de mouvement, une vitesse de déplacement maximale est déterminée qui assure pendant le passage dans le champ un respect d'un suivi de ligne de l'au moins un équipement de travail (2, 39).

2. Procédé selon la revendication 1, **caractérisé en ce que** l'unité de détection (14) présente un identifiant individuel qui permet au dispositif de commande (5, 38) d'identifier l'unité de détection (14) .

3. Procédé selon la revendication 1 ou 2, **caractérisé en ce que** l'unité de détection (14) détermine au moins la température et l'humidité comme grandeurs physiques.

4. Procédé selon l'une quelconque des revendications 1 à 3, **caractérisé en ce que** l'unité de détection (14) comprend une unité de réception de signal de position (26) qui détecte en continu l'emplacement respectif de l'équipement de travail (9) indépendamment de son état de fonctionnement.

5. Procédé selon l'une quelconque des revendications précédentes, **caractérisé en ce que** la vitesse de déplacement du véhicule de travail (1, 31) est automatiquement adaptée par le dispositif de commande (5, 38) à la vitesse de déplacement maximale déterminée.

6. Procédé selon l'une quelconque des revendications précédentes, **caractérisé en ce que** la vitesse de déplacement maximale déterminée du véhicule de travail (1, 31) est affichée par dispositif de commande (5, 38) sur un dispositif de sortie (7).

7. Procédé selon l'une quelconque des revendications précédentes, **caractérisé en ce que** des signaux de position reçus d'un système de localisation sont envoyés au dispositif de commande (5, 38), lesdits signaux étant associés par le dispositif de commande (5, 38) aux signaux respectifs détectés par ledit au moins un capteur d'accélération (21) et qui représentent l'accélération verticale.

8. Procédé selon la revendication 7, **caractérisé en ce que** les amplitudes de mouvement et leur fréquence sont cartographiées par le dispositif de commande (5, 38) au moyen des signaux de position détectés.

9. Procédé selon l'une quelconque des revendications précédentes, **caractérisé en ce que** les signaux de l'au moins un capteur d'accélération (21) sont analysés par le dispositif de commande (5, 38) pour l'identification d'un état de fonctionnement.

10. Procédé selon l'une quelconque des revendications précédentes, **caractérisé en ce que** dans l'unité de mémoire (23), au moins un paramètre de fonctionnement spécifique de l'équipement de travail (2, 39) est enregistré qui est utilisé par un appareil de commande (6, 37) du véhicule de travail (1, 31) pour faire fonctionner l'équipement de travail (2, 39).

11. Procédé selon la revendication 10, **caractérisé en ce que** ledit au moins un paramètre de fonctionnement spécifique est transmis du dispositif de commande (5, 38) ou de ladite au moins une unité de détection (14) à l'appareil de commande (6, 37) du véhicule de travail (1, 31).

12. Procédé selon l'une quelconque des revendications précédentes, **caractérisé en ce que** l'unité de détection (14) reçoit et stocke des données de niveau de remplissage fournies par un système de capteurs de niveau de remplissage d'un équipement de travail (40) répandant un fluide.

13. Procédé selon l'une quelconque des revendications précédentes, **caractérisé en ce que** l'unité de détection (14) détermine et stocke au moyen d'un capteur d'humidité (22) des données de niveau de remplissage d'un équipement de travail (40) répandant un fluide.

14. Procédé selon l'une quelconque des revendications 12 ou 13, **caractérisé en ce que** le dispositif de commande (5, 38) utilise les données de niveau de remplissage reçues de l'unité de détection (14) pour piloter un appareil de commande de transmission (6, 37) du véhicule de travail (1, 31).

15. Système (20, 30) composé d'un véhicule de travail agricole (1, 31) et d'au moins un équipement de travail (2, 39) disposé sur celui-ci, comprenant un dispositif de commande (5, 38) associé au véhicule de travail (1, 31) ainsi qu'au moins une unité de détection (14) disposée sur l'équipement de travail (2, 39) qui comprend au moins deux capteurs (21, 22, 26) pour détecter deux grandeurs physiques, ainsi qu'une unité de mémoire (23) pour stocker des données de fonctionnement de l'équipement de travail (2, 39), et une unité d'émission (24) pour une communication sans fil avec le dispositif de commande (5, 38), dans lequel, pour une activation de la communication mutuelle, le dispositif de commande (5, 38) doit être amené dans une zone d'émission de l'unité de détection (14) afin de transmettre au dispositif de commande (5, 38) des données de fonctionnement mises en mémoire tampon dans l'unité de mémoire (23),
**caractérisé en ce que** pendant un passage dans le champ, l'équipement de travail (2, 39) peut fonctionner en suivant des lignes, dans lequel un capteur est réalisé sous la forme d'un capteur d'accélération (21) qui émet en continu des signaux qui représentent une accélération verticale au dispositif de commande (5, 38) qui est pour analyser les signaux de l'au moins un capteur d'accélération (21) afin de déterminer des amplitudes de mouvement de l'équipement de travail (2, 39) et est conçue de déterminer en fonction des amplitudes de mouvement une vitesse de déplacement maximale qui assure pendant le passage dans le champ un respect du suivi de ligne de l'au moins un équipement de travail (2, 39).

16. Système (20, 30) selon la revendication 15, **caractérisé en ce que** l'unité de détection (14) peut être ajoutée ultérieurement à l'équipement de travail (2, 39) .

17. Dispositif de commande (5, 38) d'un système (20, 30) selon la revendication 15 ou 16, **caractérisé en ce que** le dispositif de commande (5, 38) est conçu pour exécuter un procédé selon l'une quelconque des revendications 1 à 14.

18. Dispositif de commande (5, 38) selon la revendication 17, **caractérisé en ce que** le dispositif de commande (5, 38) est conçu pour analyser des données de fonctionnement reçues de l'unité de détection (14).

19. Dispositif de commande (5, 38) selon la revendication 17 ou 18, **caractérisé en ce que** le dispositif de commande (5, 38) est conçu pour transmettre au moins un paramètre de sélection à un appareil de commande de transmission (6, 37) du véhicule de travail (1, 31).
